# EUROPEAN PATENT SPECIFICATION

(11) **EP 2 566 332 B1**
(45) Date of publication and mention of the grant of the patent: **31.12.2014**
(21) Application number: 11731491.4
(22) Date of filing: 06.05.2011
(51) Int. Cl.: A01N 59/26, A01N 37/44, A01N 41/02, A01N 55/00, A01N 65/00, A01P 3/00, C05B 17/00, C05G 3/00, A01N 43/653

(54) **A GRANULAR FUNGICIDAL FORMULATION COMPRISING TEBUCONAZOLE AND A FERTILIZER WITH BIOSTIMULATING ACTIVITY**
FUNGIZIDFORMULIERUNG IN GRANULATFORM MIT TEBUCONAZOL UND EINEM DÜNGER MIT BIOSTIMULIERENDER WIRKUNG
FORMULATION FONGICIDE GRANULAIRE COMPRENANT TÉBUCONAZOLE ET UN ENGRAIS À ACTIVITÉ BIOSTIMULANTE

(30) Priority: 07.05.2010 IT MI20100817
(43) Date of publication of application: 13.03.2013
(73) Proprietor: Diachem S.p.A., 24061 Albano Sant' Alessandro (BG) (IT)
(72) Inventor: SGATTONI, Paolo, 24061 Albano Sant' Alessandro (BG) (IT); CARMINATI, Angelo, 24061 Albano Sant' Alessandro (BG) (IT)
(74) Representative: Hoffmann Eitle
(86) International application number: PCT/IB2011/000969
(87) International publication number: WO 2011/138668

(56) References cited:
- WO-A1-98/44795
- WO-A1-03/045877
- WO-A2-2008/014185
- GB-A- 2 238 960
- GB-A- 2 496 434
- US-B1- 7 635 404

## Description

The present invention relates to a stable granular formulation with fungicidal activity comprising the active ingredient tebuconazole and a fertilizer with biostimulating activity. Furthermore, the present invention relates to a method for preparing said formulation. Finally, the present invention relates to the use of said granular formulation *as is* for the treatment of vegetative surfaces, in particular for lawns and/or ornamental crops in general.

It is well known that tebuconazole is a substance with fungicidal activity belonging to the chemical family of the triazoles, endowed with a particularly high level of activity against *Microdochium nivale* (pink snow mould), *Sclerotinia homeocarpa* (dollar spot), *Rhizoctonia solani* (rhizoctoniosis), *Sphaerotheca pannosa* (rose powdery mildew), *Diplocarpon rosae* (rose black spot), *Phragmidium mucronatum* (rose rust), *Puccinia spp* (various rusts) and *Oidium spp* (various powdery mildews).

Over time, many tebuconazole-based formulations have been developed. All the formulations present in the market have been conceived to be applied through a liquid vehicle, for example an aqueous solution or a solution containing water.

Examples of formulations containing tebuconazole can be the formulations called WP (wettable powder), the formulations called SC (concentrated suspension); the formulations called WG (water dispersible granules) or formulations called SE (suspoemulsions).

The known formulations described above, based on tebuconazole, are formulations that require pre-dilution (or dispersion) in an aqueous vehicle before being applied.

The tebuconazole present in said liquid formulations or dispersions is applied through the aqueous vehicle by spraying or atomizing said formulations using special sprayers or atomizers.

However, spraying or atomizing said liquid formulations or dispersions, using special sprayers or atomizers, poses a serious drawback, which is represented by the "drift effect". The drift effect is the effect whereby during the application of a liquid or dispersed formulation, the droplets produced by a sprayer or atomizer are carried by the wind to a varying degree according to their size. The drift effect, or simply "drift", is a potential source of pollution.

Moreover, it may occur that adjacent to a first surface to be treated there is a second surface for which the treatment is not necessary or is not authorized for the active developed. All the formulations present in the market have been conceived to be applied through a liquid vehicle, for example an aqueous solution or a solution containing water. Examples of formulations containing tebuconazole can be the formulations called WP (wettable powder), the formulations called SC (concentrated suspension); the formulations called WG (water dispersible granules) or formulations called SE (suspoemulsions).

US 7 635 404 B1, Divic Milenko et al; discloses a composition that is an heterogeneous blend of fertilizer granules and highly absorbent cellulosic granules carrying one or more active principle.

WO 03/045877, Agroqualità; discloses a formulation comprising fertilizers and pesticides, prepared in the form of micro-granules.

WO 2008/014185 A2, Syngenta; discloses a controlled release granule comprising a solid substrate, pesticide and oil, the pesticide and oil being distributed throughout the granule.tionally, the granules may further comprise a fertilizer material.

GB2238960, Rhone-Poulenc Agrochimie; discloses granular formulations of a phosphite fungicide in the presence of a wetting agent and a dispersing agent on a support. Such formulations are supposed to decrease the production of dust, to increase the stability, rendering easier and less toxic the handling and the measuring of the pesticide. Triazole fungicides are mentioned as possible partner in the composition for the phosphite. The granules are suspended in water.

The known formulations described above, based on tebuconazole, are formulations that require pre-dilution (or dispersion) in an aqueous vehicle before being applied.

The tebuconazole present in said liquid formulations or dispersions is applied through the aqueous vehicle by spraying or atomizing said formulations using special sprayers or atomizers.

However, spraying or atomizing said liquid formulations or dispersions, using special sprayers or atomizers, poses a serious drawback, which is represented by the "drift effect". The drift effect is the effect whereby during the application of a liquid or dispersed formulation, the droplets produced by a sprayer or atomizer are carried by the wind to a varying degree according to their size. The drift effect, or simply "drift", is a potential source of pollution.

Moreover, it may occur that adjacent to a first surface to be treated there is a second surface for which the treatment is not necessary or is not authorized for the active ingredient (s) in use. During the treatment of the first surface to be treated with said liquid formulations or dispersions there is a risk that, because of the movement (drift effect) of the droplets of liquid formulation or dispersion provoked by the wind, the same will end up on the second surface which does not require the treatment (or "which must not be treated").

Tebuconazole-based products can be used for the defence of a large number of crops, both edible and ornamental, including lawn grass.

Given the foregoing, the use of phytosanitary products for the defence of lawns (and/or of ornamental crops) requires particular attention on the operator's part and a number of operating precautions since said lawns and/or ornamental crops are often set in a particular context, for example adjacent to surfaces which do not need to or must not be treated.

Thus there is a particularly important need to reduce to a minimum the phenomena of drift connected to treatments carried out with an aqueous vehicle using sprayers and atomizers. In such treatments drift occurs to a varying degree according to the equipment and nozzles used.

As mentioned above, said "drift" phenomenon is a potential source of pollution of areas bordering/adjacent to a lawn surface, something that is particularly relevant in the case of contexts in which the lawns may be set.

Thus there remains a need to have a formulation with fungicidal activity comprising tebuconazole which does not give rise to drift phenomena, which is stable over time and can be easily handled by operators in the sector and which can be applied using the devices and machinery already present in the sector.

In particular, there remains a need to have a formulation with fungicidal activity comprising tebuconazole which can be used in treatments of vegetative surfaces, such as, for example, lawns, and/or ornamental crops in general.

The subject matter of the present invention is a granular formulation comprising tebuconazole, having the characteristics as set forth in the appended independent claim.

The subject matter of the present invention moreover relates to a method for preparing a granular formulation comprising tebuconazole, having the characteristics as set forth in the appended independent claim.

The subject matter of the present invention also relates to the use of a granular formulation comprising tebuconazole, having the characteristics as set forth in the appended independent claim.

Preferred embodiments are set forth in the appended dependent claims.

Other preferred embodiments of the present invention are set forth in the detailed description that follows by way of example, without limiting, therefore, the scope of the present invention.

The Applicant has found it useful to realize a granular formulation comprising tebuconazole.

The formulation of the present invention is applied, in treatments of vegetative surfaces, in solid granular form *as is*.

"Solid granular form *as* is" means that the granular formulation of the present invention does not require any pre-dilution (or prior dispersion) in an aqueous vehicle before being applied.

The granular formulation of the present invention is not a WP (wettable powder), SC (concentrated suspension), WG (water dispersible granules) or SE (suspoemulsion) formulation.

The formulation of the present invention is applied in solid granular form *as is*, using granule spreading devices and machines.

The Applicant has surprisingly found that the efficiency of tebuconazole (understood as the use of a reduced dose of fungicide with an equal effect obtained on the treated plot) or the fungicidal efficacy of tebuconazole (understood as obtainment of a superior fungicidal effect on the treated plot using an equal dose) can be improved if the tebuconazole is intimately combined with a fertilizer.

The present granular formulation comprises granules. The granules are made of at least one inert substrate material on which there is at least one fertilizer having biostimulating activity and tebuconazole. Said at least one inert substrate is in granular form and is selected from the group comprising calcium sulphate or bentonite or sepiolite or mixtures thereof. In the context of the present invention the inert substrate can also be other than the ones mentioned above. However, the inert substrate in the present invention must in any case be able to adsorb, and thus support, the tebuconazole and the fertilizer on the outer surface of the granules of the inert substrate. Therefore, all substrates capable of adsorbing the tebuconazole and the fertilizer onto their outer surface are part of the present invention. Said at least one inert substrate is present in a quantity comprised from 75 to 95% by weight, relative to the final weight of the formulation; preferably from 80 to 90% by weight.

In a first preferred embodiment, the inert substrate is calcium sulphate or bentonite or sepiolite in solid form and is present in the formulation in a quantity comprised from 75 to 95% by weight, relative to the final weight of the formulation; preferably from 80 to 90% by weight, relative to the final weight of the formulation. The fertilizer is a technical fertilizing means employed in order to impart to the soil one or more nutritive elements utilizable by plants. In the present formulation, the fertilizers are fertilizers having biostimulating activity.

Advantageously, said at least one fertilizer is selected from the group comprising fertilizers containing phosphites, fertilizers containing humic acids or fertilizers containing amino acids or mixtures thereof.

Preferably, the fertilizers having biostimulating activity and containing phosphites are selected from the group comprising potassium phosphite, iron phosphite or sodium phosphate or mixtures thereof.

In a preferred embodiment, the granular formulation comprises biostimulating fertilizers containing phosphites. Said phosphites are selected from the group comprising potassium phosphite, iron phosphite or sodium phosphate or mixtures thereof.

In another preferred embodiment, the granular formulation comprises biostimulating fertilizers containing the above-mentioned phosphites and/or humic acids and/or amino acids. In a first preferred embodiment, the fertilizer is selected from among the fertilizers capable of performing both a direct fertilizing action and a biostimulating action on the natural defences of the types of plants (plant species) forming the lawns to be treated.

In a preferred embodiment, said at least one fertilizer is selected from among N-P-K (Nitrogen-Phosphorous-Potassium) fertilizers.

In a preferred embodiment, the fertilizer consists of phosphorous and potassium in the form of a salt of potassium phosphite.

Advantageously, the fertilizer used is N-P-K=0-30-20 (i.e. 52% potassium phosphate, which means a nitrogen-phosphorous-potassium titre of the solution = 0-30-20 according to the indication conventionally provided by laws on fertilizers for said elements, which are respectively expressed in N-P2O5-K2O). In the present invention the fertilizer can be in a solid form which is then subsequently diluted in water or already in liquid form, such as liquid potassium phosphite 0-30-20. For example, 5.2 grams of solid potassium phosphite are added to 4.8 grams of water to give 10 grams of compound containing 52% potassium phosphite. A saturated liquid solution of potassium phosphite contains 52% potassium phosphite. In another preferred embodiment, the granular formulation comprises the fertilizer in a quantity comprised from 2 to 10% by weight, relative to the final weight of the formulation; preferably from 4 to 8%, even more preferably from 5 to 7% by weight. The granular formulation of the present invention comprises tebuconazole in a quantity comprised from 0.1 to 2% by weight, relative to the final weight of the formulation, preferably from 0.3 to 1.5%, even more preferably from 0.5 to 1% by weight.

In a preferred embodiment, the formulation of the present invention comprises tebuconazole in a quantity comprised from 0.6 to 0.8% by weight; advantageously the tebuconazole is equal to 0.7% by weight, relative to the final weight of the formulation, while the potassium phosphite or the iron phosphite or the sodium phosphite or mixtures thereof are present in a quantity comprised from 5 to 6% by weight; advantageously the phosphites are equal to 5.2% by weight, relative to the final weight of the formulation.

The presence of the fertilizer with biostimulating activity in the granular formulation of the present invention is capable of improving both the efficiency and the fungicidal efficacy of the tebuconazole itself in defending the lawn surfaces and/or ornamental crops against various fungal diseases. The granular formulation in question is a covering product for application as is, without the need for an aqueous vehicle. The formulation in question also comprises solvents, coformulants, and technological additives, known to a person skilled in the art, which can enable the granule to be prepared in such a way as to assure the maximum homogeneity of the percentage concentration of tebuconazole in the single granules and a suitable particle size of the same granules. The granular formulation in question is prepared in accordance with a method that includes a step in which said at least one inert substrate is prepared in a container provided with stirring and heating means. For example, the container is a rotary mixer. Said at least one inert substrate is selected from the group comprising calcium sulphate or bentonite or sepiolite or mixtures thereof. In the context of the present invention the inert substrate can also be other than the ones mentioned above. However, the inert substrate in the present invention must in any case be capable of adsorbing, and thus supporting, the tebuconazole and the fertilizer on the outer surface. Therefore, all substrates capable of adsorbing the tebuconazole and the fertilizer onto their outer surface are part of the present invention. In a first preferred embodiment, the inert substrate is calcium sulphate or bentonite or sepiolite in solid form and is present in a quantity comprised from 75 to 95% by weight, relative to the final weight of the formulation; preferably from 80 to 90% by weight. In a preferred embodiment, the inert substrate is introduced into the container already in granular or micro granular form. Advantageously, the granules of the inert substrate have a particle size (understood as the interval of distribution of the granule diameters) comprised from 0.1 to 2.0 mm. In a first embodiment, the particle size is comprised from 0.2 to 0.7 mm, whereas in a second embodiment it is comprised from 0.5 to 1.2 mm. In another step of the method, said at least one fertilizer is dissolved in water, preferably in demineralized water. Preferably, the quantity of water must not exceed 10%. In another step, the tebuconazole is dissolved in a nontoxic, non-flammable, colourless, odourless solvent selected from the group comprising dipropylene glycol monomethyl ether (DPM), tetrahydrofurfuryl alcohol (THFA), acetophenone and mixtures thereof. Another step of the method provides for the tebuconazole in liquid form and the fertilizer in liquid form to be atomized and adsorbed separately and in succession (first the tebuconazole and then the fertilizer or vice versa) onto the surface of the inert substrate. In practice, the inert substrate in granular form is coated with a coating of tebuconazole and with a coating of the biostimulating fertilizer containing phosphites (or vice versa). The above-described steps are carried out at a temperature comprised from 20 to 25 °C.

At the end of pre-established spraying and final homogenization times (for each production batch, equal to 3-4 tons of formulated product, manufacturing times of 4-5 hours are envisaged), a sample is taken for physicochemical tests serving to establish the quality of the granular formulation. In a preferred embodiment, a granular formulation prepared in accordance with the method set forth above can be thus represented (quantities expressed in grams/100 grams of formulation (% by weight)): tebuconazole tech 97%: 0.73 (= 0.70 of pure tebuconazole); inert substrate, calcium sulphate 85.5; biostimulating fertilizer, potassium phosphite (N-P-K 0-58-38): 5.2; demineralized water: 4.8 and dipropylene glycol monomethyl ether (DPM): 3.8.

In another preferred embodiment, a granular formulation prepared in accordance with the method set forth above can be thus represented (quantities expressed in grams/100 grams of formulation (% by weight)): tebuconazole tech 97%: 0.73 (=0.70 of pure tebuconazole); inert substrate, calcium sulphate 85.5; biostimulating fertilizer, potassium phosphite (N-P-K 0-58-38): 5.2; demineralized water: 4.8 and tetrahydrofurfuryl alcohol (THFA): 3.8.

In another preferred embodiment, a granular formulation prepared in accordance with the method set forth above can be thus represented (quantities expressed in grams/100 grams of formulation (% by weight)): tebuconazole tech 97%: 0.73 (= 0.70 of pure tebuconazole); inert substrate, bentonite 85.5; biostimulating fertilizer, potassium phosphite (N-P-K 0-58-38): 5.2; demineralized water: 4.8 and dipropylene glycol monomethyl ether (DPM ): 3.8.

In another preferred embodiment, a granular formulation prepared in accordance with the method set forth above can be thus represented (quantities expressed in grams/100 grams of formulation (% by weight)): tebuconazole tech 97%: 0.73 (= 0.70 of pure tebuconazole); inert substrate, calcium sulphate 85.5; biostimulating fertilizer: pure humic acid: 3; demineralized water: 7 and dipropylene glycol monomethyl ether (DPM): 3.8.

In another preferred embodiment, a granular formulation prepared in accordance with the method set forth above can be thus represented (quantities expressed in grams/100 grams of formulation (% by weight)): tebuconazole tech 97%: 0.73 (=0.70 of pure tebuconazole); inert substrate, calcium sulphate 85.5; biostimulating fertilizer, amino acids: 4; demineralized water: 6 and dipropylene glycol monomethyl ether: 3.8.

Advantageously, the present formulation allows lawns to be treated without risks of drift and it also capable of providing the maximum fungicidal efficacy for the protection of the lawns against fungal diseases.

The granular formulation with fungicidal activity of the present invention has valid application in lawn treatments for protection against the diseases set forth below solely by way of example, and thus not as a limitation, selected from the group comprising: *Michrodochium nivale* (pink snow mould), *Sclerotinia homeocarpa* (dollar spot) and *Rhizoctonia solani* (rhizoctoniosis). The formulation in question is used in doses comprised from 50-70 Kg/ha of treated surface.

The Applicant has found that the association between tebuconazole and a biostimulating fertilizer, preferably a fertilizer selected from among potassium phosphite or iron phosphite or sodium phosphite or mixtures thereof, has an unexpectedly equivalent fungicidal efficacy also if used at doses of active ingredient/hectare reduced to approximately 35%, compared to traditional tebuconazole-based liquid formulations.

The Applicant demonstrated the above through a field trial on lawns against *Sclerotinia homeocarpa* (dollar spot).

In the trial, formulation 1, as described in Example 1, was compared with the liquid treatment formulation consisting of 25 WG tebuconazole (25% pure tebuconazole formulated in water dispersible granules). The trial showed the achievement of a complete and better agronomic efficacy with the granular formulation used as is also at a 30% lower dose of active ingredient compared to the dose of the liquid treatment product used at the standard dose on the label.

The above was obtained due to an improvement in fungicidal efficacy, which increased in the case of the granular formulation in question thanks to the association of tebuconazole with the biostimulating fertilizer, the latter being capable of performing both a typical nutritional action, and a so-called biostimulating action, which unexpectedly improves the fungicidal efficacy of the tebuconazole.

Formulation example 1: the granular formulation of the present invention comprises tebuconazole and potassium phosphite (formulation F1). The quantities are expressed in grams/100 grams of formulation (% by weight).

Formulation 1 (F1) comprises:
i) Tebuconazole Tech 97%: 0.73 (= 0.70 of pure tebuconazole);
ii) Inert substrate: Calcium sulphate 85.5;
iii) Biostimulating fertilizer: Potassium phosphite (N-P-K 0-58-38): 5.2;
iv) Demineralized water: 4.8;
v) Dipropylene glycol monomethyl ether (DPM): 3.8

Field trial against Sclerotinia homeocarpa (dollar spot) on lawns:
the granular formulation F1 used as is was submitted to a field trial on lawns for defence against *Sclerotinia homeocarpa* (Dollar Spot), compared with the 25% WG tebuconazole formulation used with traditional liquid spraying.

The 25 WG formulation used was the main product of reference in the market, called FOLICUR 25 WG. Doses and intervention strategies are shown in Tables 1 and 2. The surveys performed to measure the spread of the disease in the different trial plots are reported in Tables 3 and 4.

In each trial, several successive surveys were performed in order to reveal the trend in the disease. The surveys were performed evaluating the areas affected by the disease.

From an examination of the individual surveys it is evident that the granular product used as is assures a defence against disease equivalent to the WG product for liquid treatments also at a 30% lower dose of tebuconazole.

Moreover, the trend in the disease in the different plots, as shown by the succession of surveys performed up to 1-1.5 months after the last treatment, shows a longer lasting efficacy of the granular product, which seems to assure a longer duration of protection compared to the product for liquid treatments.

**Table 1: Products, doses used and number of treatments with respect to trial A**

| Plots | | DOSES (grams/ha) | | TREATMENTS | |
|---|---|---|---|---|---|
| | | Formulation | tebuconazole | Interval in days | Total no. |
| 1 | Untreated control | - | - | --- | --- |
| 2 | Tebuconazole 0.7 (F1) | 50,000 | 350 | 14+/-1 | 5 |
| 3 | Tebuconazole 0.7 (F1) | 70,000 | 490 | 14+/-1 | 5 |
| 4 | Tebuconazole 25 WG | 2,000 | 500 | 14+/-1 | 5 |

**Table 2: Products, doses used and number of treatments with respect to trial B**

| Plots | | DOSES (grams/ha) | | TREATMENTS | |
|---|---|---|---|---|---|
| | | Formulation | tebuconazole | Interval in days | Total no. |
| 1 | Untreated control | - | - | --- | --- |
| 2 | Tebuconazole 0.7 (F1) | 50,000 | 350 | 14+/-1 | 4 |
| 3 | Tebuconazole 0.7 (F1) | 70,000 | 490 | 14+/-1 | 4 |
| 4 | Tebuconazole 25 WG | 2,000 | 500 | 14+/-1 | 4 |

**Table 3: Surveys on the spread of the disease in the different trial plots (survey 1 = at 3^{rd} treatment; survey 2 = at 5^{th} treatment; survey 3 = 43 days after the 5^{th} treatment). Surveys=Number of diseased spots per square metre.**

| 1.1.1 | **1.1.2 PRODUCT** | **1.2 DOSE tebuconazole g/ha** | **2** | **SURVEYS** | |
|---|---|---|---|---|---|
| | | | **1** | **2** | **3** |
| T1 | Untreated | - | 0a* | 10.1 a* | 14.0 a* |
| T2 | Tebuconazole 0.7 (F1) (50 kg/ha) | 350 | 0a | 4.1 b | 8.4 a |
| T3 | Tebuconazole 25 WG (2 Kg/ha) | 500 | 0a | 3.2 b | 13.7 a |

| | | | | | |
|---|---|---|---|---|---|
| * Numbers followed by different letters differ in a statistically significant manner according to Tukey's HSD test (P=0.05) | | | | | |

**Table 4: Surveys on the spread of the disease in the different plots of trial B (survey 1 = at 3^{rd} treatment; survey 2 = at the 4^{th} treatment; survey 3 = 14 days after the 4^{th} treatment; survey 4 = 30 days after the 4^{th} treatment). Surveys=Number of diseased spots per square metre.**

| **PLOT** | **2.1 PRODUCT** | **2.2 DOSE** | **3** | | **SURVEYS** | |
|---|---|---|---|---|---|---|
| | | **2.3 tebuconazole g/ha** | **1** | **2** | **3** | **4** |
| **T1** | **3.1.1.1 Untreated** | - | 3.7 a* | 6.8 a* | 18.2 a* | 21.3 a* |
| T2 | Tebuconazole 0.7 (F1) (50 kg/ha) | 350 | 0.4 b | 0.5 b | 4.1 b | 3.1 b |
| T34 | Tebuconazole 25 WG (2 Kg/ha) | 500 | 0.3 b | 0.4 b | 3.4 b | 4.1 b |

| | | | | | | |
|---|---|---|---|---|---|---|
| * Numbers followed by different letters differ in a statistically significant manner according to Tukey's HSD test (P=0.05) | | | | | | |

## Claims

1. A granular formulation comprising granules, said granules being made of at least one inert substrate material, on which at least one fertilizer having biostimulating activity containing phosphites and the tebuconazole are absorbed.

2. The formulation according to claim 1, wherein said inert substrate material is selected from the group comprising calcium sulphate, bentonite, sepiolite or mixtures thereof; preferably said material is present in the formulation in a quantity comprised from 75 to 95% by weight, relative to the final weight of the formulation; preferably from 80 to 90% by weight, relative to the final weight of the formulation.

3. The formulation according to claim 2, wherein said at least one fertilizer is present in the formulation in a quantity comprised from 2 to 10% by weight, relative to the final weight of the formulation; preferably from 4 to 8%, even more preferably from 5 to 7% by weight.

4. The formulation according to claim 3, wherein the biostimulating fertilizers containing phosphites are selected from the group comprising potassium phosphite, iron phosphite, sodium phosphite or mixtures thereof.

5. The formulation according to any one of claims 1-4, wherein the tebuconazole is present in the formulation in a quantity comprised from 0.1 to 2% by weight, relative to the final weight of the formulation; preferably from 0.3 to 1.5%, even more preferably from 0.5 to 1% by weight.

6. A method for preparing the formulation according to any one of claims 1-5, comprising the following steps:
- preparing at least one inert substrate material in granular form in a first container provided with stirring means;
- preparing a tebuconazole solution in a second container,
- preparing a solution comprising at least one fertilizer having biostimulating activity containing phosphites in a third container,
- separately applying said solution of tebuconazole and said solution comprising at least one fertilizer having biostimulating activity containing phosphites on said inert substrate so as to give a formulation in granular form which comprises granules of an inert substrate material, a fertilizer having biostimulating activity containing phosphites and tebuconazole.

7. The method according to claim 6, wherein the tebuconazole in liquid form and the fertilizer containing phosphites in liquid form are atomized and adsorbed in succession onto the outer surface of the granules of the inert substrate so as to give a granular formulation in which the granules of the inert substrate are coated with a coating of tebuconazole and with a coating of the biostimulating fertilizer containing phosphites.

8. The method according to claim 7, wherein the granules of the inert substrate material have a particle size comprised from 0.1 to 2.0 mm; preferably the particle size is comprised from 0.2 to 0.7 mm or, alternatively, is comprised from 0.5 to 1.2 mm.

9. Use of a granular formulation according to any one of claims 1-5, as a fungicidal formulation for the treatment of vegetative surfaces; in particular for the treatment of lawns and/or ornamental crops in general.

10. The use according to claim 9, wherein said granular formulation is utilized as is in solid granular form during the fungicidal treatment of the vegetative surfaces.

## Patentansprüche

1. Granulare Formulierung, die Granulat umfasst, worin das Granulat aus mindestens einem inerten Substratmaterial hergestellt ist, auf das mindestens ein Düngemittel, das biostimulierende Wirkung aufweist und Phosphite enthält, sowie Tebuconazol absorbiert sind.

2. Formulierung gemäß Anspruch 1, worin das inerte Substratmaterial aus der Gruppe ausgewählt ist, die Calciumphosphat, Bentonit, Sepiolith oder Mischungen daraus umfasst; wobei das Material vorzugsweise in der Formulierung in einer Menge zwischen 75 und 95 Gew.% vorhanden ist, relativ zum Endgewicht der Formulierung, vorzugsweise von 80 bis 90 Gew.% relativ zum Endgewicht der Formulierung.

3. Formulierung gemäß Anspruch 2, worin das mindestens eine Düngemittel in der Formulierung in einer Menge von 2 bis 10 Gew.% vorhanden ist, relativ zum Endgewicht der Formulierung, vorzugsweise von 4 bis 8 Gew.%, stärker bevorzugt 5 bis 7 Gew.%.

4. Formulierung gemäß Anspruch 3, worin die biostimulierenden Düngemittel, die Phosphite umfassen, aus der Gruppe bestehend aus Kaliumphosphit, Eisenphosphit, Natriumphosphit oder Mischung daraus ausgewählt sind.

5. Formulierung gemäß irgendeinem der Ansprüche 1 bis 4, worin das Tebuconazol in der Formulierung in einer Menge zwischen 0,1 bis 2 Gew.% vorhanden ist, relativ zum Endgewicht der Formulierung; vorzugsweise von 0,3 bis 1,5 Gew.%, stärker bevorzugt von 0,5 bis 1 Gew.%.

6. Verfahren zur Herstellung der Formulierung gemäß irgendeinem der Ansprüche 1 bis 5, das die folgenden Schritte umfasst:
- Herstellung mindestens eines inerten Substratmaterials in granularer Form in einem ersten Behälter, der mit Mitteln zum Rühren versehen ist;
- Herstellung einer Tebuconazol-Lösung in einem zweiten Behälter,
- Herstellung einer Lösung, die mindestens ein Düngemittel umfasst, das biostimulierende Wirkung aufweist und Phosphite aufweist, in einem dritten Behälter,
- getrenntes Aufbringen der Lösung des Tebuconazols und der Lösung, die mindestens ein Düngemittel umfasst, das biostimulierende Wirkung aufweist und Phosphite enthält, auf das inerte Substrat, um eine Formulierung in granularer Form zu ergeben, die ein Granulat eines inerten Substratmaterials, ein Düngemittel mit biostimulierender Wirkung, das Phosphite enthält, und Tebuconazol umfasst.

7. Verfahren gemäß Anspruch 6, worin das Tebuconazol in flüssiger Form und das Düngemittel, das Phosphite enthält, in flüssiger Form zerstäubt und nachfolgend auf die äußere Oberfläche des Granulat der inerten Substanz adsorbiert werden, um eine granulare Formulierung zu ergeben, in der das Granulat der inerten Substanz mit einer Beschichtung aus Tebuconazol und einer Beschichtung des biostimulierenden Düngemittels, das Phosphite enthält, beschichtet ist.

8. Verfahren gemäß Anspruch 7, worin das Granulat des inerten Substratmaterials eine Partikelgröße zwischen 0,1 und 2,0 mm aufweist; vorzugsweise eine Partikelgröße von 0,2 bis 0,7 mm aufweist oder alternativ dazu von 0,5 bis 1,2 mm.

9. Verwendung einer granularen Formulierung gemäß irgendeinem der Ansprüche 1 bis 5, als fungizide Formulierung für die Behandlung von Pflanzenflächen; insbesondere für die Behandlung von Rasen und/oder Zierpflanzen im allgemeinen.

10. Verwendung gemäß Anspruch 9, worin die granulare Formulierung, so wie sie in fester granularer Form vorliegt, bei der fungiziden Behandlung der Pflanzenflächen eingesetzt wird.

## Revendications

1. Formulation granulaire comprenant des granules, lesdites granules étant réalisées en au moins un matériau de substrat inerte, sur lequel au moins un engrais ayant une activité biostimulante contenant des phosphites et le tébuconazole sont absorbés.

2. Formulation selon la revendication 1, dans laquelle ledit matériau de substrat inerte est choisi dans le groupe comprenant le sulfate de calcium, la bentonite, la sépiolite ou des mélanges de ceux-ci ; de préférence, ledit matériau est présent dans la formulation en une quantité comprise entre 75 et 95% en poids, par rapport au poids final de la formulation ; de préférence entre 80 et 90% en poids, par rapport au poids final de la formulation.

3. Formulation selon la revendication 2, dans laquelle ledit au moins un engrais est présent dans la formulation en une quantité comprise entre 2 et 10% en poids, par rapport au poids final de la formulation ; de préférence entre 4 et 8%, encore plus préférablement entre 5 et 7% en poids.

4. Formulation selon la revendication 3, dans laquelle les engrais biostimulants contenant des phosphites sont choisis dans le groupe comprenant le phosphite de potassium, le phosphite de fer, le phosphite de sodium ou des mélanges de ceux-ci.

5. Formulation selon l'une quelconque des revendications 1 à 4, dans laquelle le tébuconazole est présent dans la formulation en une quantité comprise entre 0,1 et 2% en poids, par rapport au poids final de la formulation ; de préférence entre 0, 3 et 1,5%, encore plus préférablement entre 0,5 et 1% en poids.

6. Procédé de préparation de la formulation selon l'une quelconque des revendications 1 à 5, comprenant les étapes suivantes qui consistent :
à préparer au moins un matériau de substrat inerte sous forme granulaire dans un premier récipient pourvu d'un moyen d'agitation ;
à préparer une solution de tébuconazole dans un deuxième récipient,
à préparer une solution comprenant au moins un engrais ayant une activité biostimulante contenant des phosphites dans un troisième récipient,
à appliquer séparément ladite solution de tébuconazole et ladite solution comprenant au moins un engrais ayant une activité biostimulante contenant des phosphites sur ledit substrat inerte de manière à donner une formulation sous forme granulaire qui comprend des granules d'un matériau de substrat inerte, un engrais ayant une activité biostimulante contenant des phosphites et le tébuconazole.

7. Procédé selon la revendication 6, dans lequel le tébuconazole sous forme liquide et l'engrais contenant des phosphites sous forme liquide sont atomisés et adsorbés successivement sur la surface externe des granules du substrat inerte de manière à donner une formulation granulaire dans laquelle les granules du substrat inerte sont revêtues d'un revêtement de tébuconazole et d'un revêtement de l'engrais biostimulant contenant des phosphites.

8. Procédé selon la revendication 7, dans lequel les granules du matériau de substrat inerte ont une taille de particules comprise entre 0,1 et 2,0 mm ; de préférence, la taille de particules est comprise entre 0,2 et 0,7 mm ou, alternativement, est comprise entre 0,5 et 1,2 mm.

9. Utilisation d'une formulation granulaire selon l'une quelconque des revendications 1 à 5, en tant que formulation fongicide pour le traitement de surfaces végétatives ; en particulier pour le traitement de gazons et/ou de cultures ornementales en général.

10. Utilisation selon la revendication 9, dans laquelle ladite formulation granulaire est utilisée telle quelle sous forme granulaire solide pendant le traitement fongicide des surfaces végétatives.
